# FASCICULE DE BREVET EUROPEEN

(11) **EP 2 414 427 B1**
(45) Date de publication et mention de la délivrance du brevet: **01.03.2017**
(21) Numéro de dépôt: 10716589.6
(22) Date de dépôt: 29.03.2010
(51) Int. Cl.: C08G 63/00, C08G 69/00, C08G 83/00

(54) **UTILISATION EN TANT QU'ABSORBEUR DE CHOCS, D'UN MATÉRIAU FORME DE MOLÉCULES ARBORESCENTES COMPORTANT DES GROUPES ASSOCIATIFS**
VERWENDUNG EINES MATERIALS AUS VERZWEIGTEN MOLEKÜLEN MIT ASSOZIATIVEN GRUPPEN ALS STOSSDÄMPFER
USE, AS A SHOCK ABSORBER, OF A MATERIAL FORMED FROM BRANCHED MOLECULES CONTAINING ASSOCIATIVE GROUPS

(30) Priorité: 02.04.2009 FR 0952126
(43) Date de publication de la demande: 08.02.2012
(73) Titulaire: Arkema France, 92700 Colombes (FR)
(72) Inventeur: HIDALGO, Manuel, F-69530 Brignais (FR); DUFAURE, Nicolas, F-27300 Bernay (FR); COUTURIER, Jean-Luc, F-69006 Lyon (FR); VAN HEMELRYCK, Bruno, F-69630 Chaponost (FR)
(74) Mandataire: Lhoste, Catherine
(86) Numéro de dépôt international: PCT/FR2010/050567
(87) Numéro de publication internationale: WO 2010/112743

(56) Documents cités:
- WO-A1-96/07688
- WO-A1-2009/071554
- FR-A1- 2 766 197
- US-B1- 6 403 724

## Description

La présente invention concerne le domaine des matériaux absorbant les chocs, et plus particulièrement l'utilisation des capacités d'amortissement d'un matériau formé de molécules arborescentes comportant des groupes associatifs.

Les matériaux absorbant les chocs sont biens connus de l'homme du métier. On peut citer, de manière générale, les matériaux élastomériques thermoplastiques comme les copolymères à blocs tels que les SBC (styrène bloc copolymères) ou thermofixes (vulcanisés) comme le caoutchouc naturel réticulé ou encore le caoutchouc synthétique comme les BR, SBR, NBR (butadiène « rubber », styrène-butadiène « rubber », nitrile butadiène « rubber »).On peut citer, plus particulièrement parmi ces matériaux, les copolymères à base d'EVA, les polynorbornènes, ou encore les polyuréthanes. Ces matériaux trouvent de nombreuses applications, notamment comme éléments de structure de semelles de chaussure, de gants, de gilets pare-balle, de cibles de tir notamment pour flèches, balles, fléchettes, mais également de revêtements pour manches d'outils, de tapis de sol, ou encore d'éléments anti-vibration.

Du fait de ces nombreuses applications possibles, il existe un besoin permanent pour de nouveaux produits capables d'absorber les chocs, c'est à dire présentant de bonnes propriétés d'amortissement.

L'invention a donc pour objet l'utilisation en tant qu'absorbeur de chocs, d'un matériau spécifique formé de molécules arborescentes comportant des groupes associatifs.

Ce matériau spécifique renferme des molécules présentant une structure arborescente particulière leur conférant des propriétés d'amortissement, pouvant varier selon la proportion des réactifs utilisés pour leur synthèse, ainsi que d'autres propriétés. Ainsi, en fonction du nombre de fonctions réactives présentes sur les composés initiaux et du nombre de fonctions réactives restantes à l'issue de la première étape de synthèse, nombres qu'il est aisé d'ajuster par le choix des matières premières et par l'emploi d'un rapport stoechiométrique approprié, on peut obtenir au choix et de façon contrôlée, un solide semi-cristallin ou amorphe, un liquide viscoélastique ou encore un matériau élastomère éventuellement thermoplastique. Plus précisément, lorsque la fonctionnalité moyenne des monomères est peu élevée, on produit des molécules essentiellement linéaires ayant un comportement viscoélastique et pouvant présenter éventuellement une phase solide semi-cristalline ou amorphe, tandis qu'on forme des réseaux comportant éventuellement une fraction insoluble et présentant des propriétés élastomères lorsque cette fonctionnalité est élevée.

Il est ainsi possible d'obtenir des matériaux présentant non seulement une bonne capacité à absorber les chocs mais également un compromis de propriétés telles qu'une bonne capacité d'auto-réparation, une bonne résistance au fluage, une bonne fluidité lors de leur mise en oeuvre.

Par « utilisation en tant qu'absorbeur de chocs », d'un matériau tel que défini ci-dessus, on comprendra au sens de l'invention une utilisation des capacités d'amortissement du matériau spécifique tel que défini ci-dessus, renfermant des molécules présentant une structure arborescente.

Par amortissement, on entend au sens de l'invention un amortissement tel que mesuré par la tangente delta (appelée également facteur de perte) du matériau, supérieure ou égale à 0,5, ou préférentiellement supérieure à 1, à la température d'utilisation. Ladite tangente delta étant calculée comme le rapport des modules dynamiques de perte (en cisaillement ou en élongation, G" ou E") et de conservation (en cisaillement ou en élongation, G', E'). Ces modules dynamiques sont obtenus par des mesures d'analyse mécanique dynamique (sigles en anglais DMA) ou par des mesures dynamiques dans un rhéomètre, à des fréquences supérieures à 50 Hz, et de préférence, supérieures ou égales à 100 Hz. Ce type de mesures est bien connu de l'homme du métier et a été largement décrit dans la littérature, par exemple dans l'ouvrage intitulé « Viscoelastic properties of polymers » par J.D. Ferry, 3ème édition, WILEY, 1980.

Les termes « absorbant les chocs » doivent être compris au sens large, c'est à dire comme capable d'absorber et de dissiper l'énergie cinétique créée par le choc entre un objet quelconque et le matériau spécifique défini ci-dessus.

Il est également possible d'obtenir un matériau ayant non seulement des propriétés d'absorption des chocs, mais également les propriétés d'un élastomère thermoplastique, c'est-à-dire d'un matériau capable, à température ambiante, de pouvoir être soumis à une déformation uniaxiale, avantageusement d'au moins 20% pendant 15 minutes, puis de recouvrer, une fois la contrainte relâchée, sa dimension initiale, avec une déformation rémanente inférieure à 5% de sa dimension initiale, et qui peut être mis ou remis en forme à haute température. Il a en outre été observé que ce matériau pouvait être auto-cicatrisant, c'est-à-dire capable, une fois coupé, déchiré ou rayé, de se réparer par simple remise en contact des surfaces fracturées sans nécessité de chauffer ni d'appliquer une pression importante ni d'effectuer une quelconque réaction chimique, le matériau ainsi réparé conservant des propriétés élastomères.

Le matériau peut être obtenu selon un procédé consistant à faire réagir, dans une première étape, un premier composé renfermant une proportion élevée de molécules au moins trifonctionnelles sur un second composé porteur d'un ou plusieurs groupes associatifs, dans des proportions non stoechiométriques laissant subsister des fonctions libres sur le premier composé, pour obtenir un matériau que l'on fait réagir, dans une seconde étape, avec un composé au moins bifonctionnel.

La présente invention a donc pour objet l'utilisation des capacités d'amortissement d'un matériau comprenant des molécules arborescentes constituées chacune de fragments au moins bifonctionnels et de fragments au moins trifonctionnels unis les uns aux autres par des ponts ester ou thioester, seuls ou en combinaison avec des ponts amide ou urée, lesdits ponts étant formés à partir de deux fonctions portées par des fragments différents, lesdites molécules comportant en outre, sur les fragments situés aux extrémités des arborescences, des groupes associatifs terminaux capables de s'associer les uns aux autres par des liaisons hydrogène et reliés de façon covalente aux fonctions ne participant pas aux dits ponts.

Selon une forme d'exécution préférée de l'invention, ce matériau est susceptible d'être obtenu selon le procédé comprenant les étapes successives suivantes :
(a) la réaction d'au moins un composé au moins trifonctionnel (A) porteur de premières et secondes fonctions avec au moins un composé (B) portant, d'une part, au moins un groupe réactif susceptible de réagir avec les premières fonctions de (A) et, d'autre part, au moins un groupe associatif;
(b) la réaction du ou des composé(s) obtenu(s) à l'étape (a) avec au moins un composé au moins bifonctionnel (C) dont les fonctions sont susceptibles de réagir avec les secondes fonctions du composé (A) pour former des ponts ester ou thioester, seuls ou en combinaison avec des ponts amide ou urée.

Par "arborescente", on entend selon l'invention une molécule ramifiée dont le squelette comporte au moins deux ramifications. Cette définition n'exclut pas que diverses ramifications d'une même molécule puissent se rejoindre pour former des boucles.

Il est possible qu'une fraction des molécules arborescentes selon l'invention soit insoluble à la fois dans l'eau et dans tout solvant organique.

Par "groupes associatifs", on entend des groupes susceptibles de s'associer les uns aux autres par des liaisons hydrogène, avantageusement par 1 à 6 liaisons hydrogène. Des exemples de groupes associatifs utilisables selon l'invention sont les groupes imidazolidonyle, triazolyle, triazinyle, bis-uréyle, uréido-pyrimidyle. On préfère que le nombre moyen des groupes associatifs terminaux par molécule du matériau soit d'au moins 3. Il est avantageusement d'au plus 6. Ceux-ci sont reliés de façon covalente à la molécule. Par "de façon covalente", on entend que les groupes associatifs sont reliés aux fonctions terminales de la molécule soit via une liaison directe soit, de préférence, via une chaîne, notamment alkylène.

Par "groupes réactifs" ou "fonctions", on entend des fonctions chimiques susceptibles de réagir avec d'autres fonctions chimiques pour former des liaisons covalentes, conduisant notamment à la formation de ponts ester, thioester, amide, urée ou uréthanne et en particulier de ponts ester et amide. Un composé "bifonctionnel" désigne un composé portant deux fonctions réactives identiques ou différentes. Un composé "au moins trifonctionnel" désigne un composé portant au moins trois fonctions réactives identiques ou différentes.

Par "fragment", on entend au sens de l'invention un motif d'une molécule situé entre deux ou trois ponts tels que définis ci-dessus. Un fragment "bifonctionnel" est susceptible d'être obtenu à partir d'un composé bifonctionnel et un fragment "trifonctionnel" est susceptible d'être obtenu à partir d'un composé trifonctionnel. Les molécules arborescentes selon l'invention comprennent des fragments au moins bifonctionnels, avantageusement bifonctionnels, et des fragments au moins trifonctionnels, avantageusement trifonctionnels.

Le composé (A) mis en oeuvre dans la première étape du procédé selon l'invention peut en particulier porter au moins trois fonctions identiques ou différentes choisies parmi les fonctions acide, ester ou chlorure d'acyle. Il comprend avantageusement de 5 à 100, de préférence de 12 à 100 et plus préférentiellement de 24 à 90 atomes de carbone.

Le composé (A) peut, dans la première étape du procédé selon l'invention, se trouver en mélange avec des composés mono- et bifonctionnels, tels que des mono- et diacides, en particulier des mono- et dimères d'acides gras.

On préfère utiliser les trimères (oligomères de 3 monomères identiques ou différents) et mélanges de dimères et trimères d'acides gras d'origine végétale. Ces composés résultent de l'oligomérisation d'acides gras insaturés tels que : l'acide undécylénique, myristoléique, palmitoléique, oléique, linoléique, linolénique, ricinoléique, eicosénoïque, docosénoïque, que l'on trouve habituellement dans les huiles de pin (Tall oil fatty acids), colza, maïs, tournesol, soja, pépins de raisin, lin, jojoba, ainsi que les acides eicosapentaénoïque et docosahexaénoïque que l'on trouve dans les huiles de poissons.

On peut citer comme exemples de trimères d'acides gras, les composés de formules suivantes qui illustrent les trimères cycliques issus d'acides gras à 18 atomes de carbone, sachant que les composés disponibles dans le commerce sont des mélanges d'isomères stériques et d'isomères de position de ces structures, éventuellement partiellement ou totalement hydrogénés.

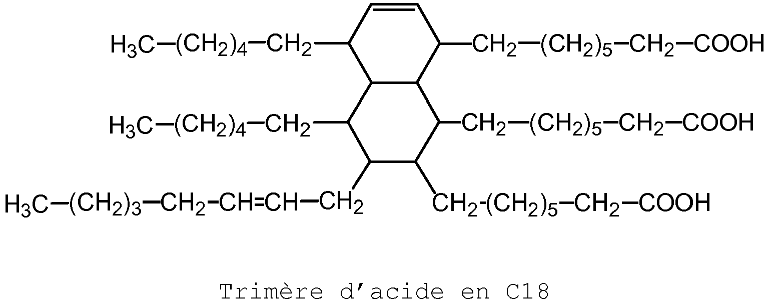

On peut ainsi utiliser un mélange d'oligomères d'acides gras contenant des dimères, trimères et monomères d'acides gras en C₁₈ linéaires ou cycliques, ledit mélange étant majoritaire en dimères et trimères et contenant un faible pourcentage (habituellement, moins de 5%) de monomères. De manière préférée, ledit mélange comprend :
- 0,1 à 40% en poids, de préférence 0,1 à 5% en poids de monomères d'acides gras identiques ou différents,
- 0,1 à 99% en poids, de préférence 18 à 85% en poids de dimères d'acides gras identiques ou différents, et
- 0,1 à 90% en poids, de préférence 5 à 85% en poids, de trimères d'acides gras identiques ou différents.

On peut citer, comme exemples de mélanges dimères/trimères d'acides gras (% en poids) :
- le Pripol® 1017 d'Uniqema, mélange de 75-80% de dimères et 18-22% de trimères avec de l'ordre de 1-3 % d'acides gras monomères,
- le Pripol® 1048 d'Uniqema, mélange de 50/50% de dimères/trimères,
- le Pripol® 1013 d'Uniqema, mélange de 95-98% de dimères et de 2-4% de trimères avec 0,2 % maximum d'acides gras monomères,
- le Pripol® 1006 d'Uniqema, mélange de 92-98% de dimères et d'un maximum de 4% de trimères avec 0,4 % maximum d'acides gras monomères,
- le Pripol® 1040 d'Uniqema, mélange de dimères et de trimères d'acide gras avec au moins 75% de trimères et moins de 1% d'acides gras monomères,
- l'Unidyme® 60 d'Arizona Chemicals, mélange de 33% de dimères et de 67% de trimères avec moins de 1% d'acides gras monomères,
- l'Unidyme® 40 d'Arizona Chemicals, mélange de 65% de dimères et de 35% de trimères avec moins de 1% d'acides gras monomères,
- l'Unidyme® 14 d'Arizona Chemicals, mélange de 94% de dimères et de moins de 5% de trimères et autres oligomères supérieurs avec de l'ordre de 1% d'acides gras monomères,
- l'Empol® 1008 de Cognis, mélange de 92% de dimères et de 3% d'oligomères supérieurs, essentiellement des trimères, avec de l'ordre de 5% d'acides gras monomères,
- l'Empol® 1018 de Cognis, mélange de 81 % de dimères et de 14% d'oligomères supérieurs, dont essentiellement des trimères, avec de l'ordre de 5 % d'acides gras monomères,
- le Radiacid® 0980 d'Oleon, mélange de dimères et trimères avec au moins 70% de trimères.

Les produits Pripol®, Unidyme®, Empol®, et Radiacid® comprennent des monomères d'acides gras en C₁₈ et des oligomères d'acides gras correspondant à des multiples de C₁₈.

Selon une variante de l'invention, au lieu de triacides, on peut utiliser comme composé (A) un composé renfermant au moins trois fonctions ester ou chlorure d'acyle.

A titre d'exemple d'ester, on peut citer un ester méthylique, éthylique ou isopropylique (de préférence méthylique) d'un trimère d'acide gras ou d'un mélange d'oligomères d'acides gras tels que définis ci-dessus.

En variante encore, le composé (A) peut être un composé au moins trifonctionnel renfermant au moins deux fonctions différentes, choisies avantageusement parmi les fonctions acide, ester et chlorure d'acyle.

De son côté, le composé (B) porte au moins un groupe réactif qui peut notamment être choisi parmi les groupes amine primaire ou secondaire ou alcool. En variante, le composé (B) peut porter au moins deux tels groupes identiques ou différents.

Dans le cas notamment où le groupe réactif du composé (B) est susceptible de réagir à la fois avec les premières et secondes fonctions du composé (A), on préfère que, dans la première étape du procédé selon l'invention, le rapport du nombre des groupes réactifs du composé (B) à la somme des fonctions du composé (A) aille de 0,1 à 0,8 et de préférence de 0,3 à 0,8.

Le composé (B) peut ainsi répondre à l'une quelconque des formules (B1) à (B3) : 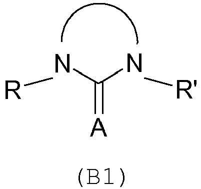 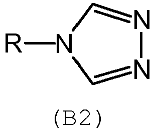 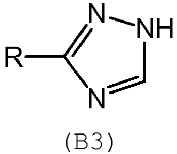 où :
R désigne un motif contenant au moins un groupe amine primaire ou secondaire ou alcool,
R' désigne un atome d'hydrogène,
A désigne un atome d'oxygène ou de soufre ou un groupement -NH, de préférence un atome d'oxygène.

Des exemples préférés de composés (B) sont la 2-aminoéthylimidazolidone (UDETA), la 1-(2-[(2-aminoéthyl)amino]éthyl)imidazolidone (UTETA), la 1-(2-{2-[(2-aminoéthylamino]éthyl}amino)éthyl]imidazolidone (UTEPA), le 3-amino-1,2,4-triazole et le 4-amino-1,2,4-triazole.

A titre d'exemple de composé susceptible d'être obtenu à l'issue de la première étape du procédé décrit ci-dessus, on peut citer :
- L'UDe 1008 issu de la réaction entre l'Empol®1008 et l'UDETA ;
- L'UDe 1060 issu de la réaction entre l'Unidyme® 60 et l'UDETA ;
- L'UDe 1060/1008 issu de la réaction entre l'Empol®1008, l'Unidyme® 60 et l'UDETA ;
- L'UDe 1017 issu de la réaction entre le Pripol® 1017 et l'UDETA ;
- L'UDe 1048 issu de la réaction entre le Pripol® 1048 et l'UDETA ;
- L'UDe 1014 issu de la réaction entre l'Unidyme® 14 et l'UDETA ;
- L'UDe 1040 issu de la réaction entre le Pripol® 1040 et l'UDETA ;
- L'UDe 0980 issu de la réaction entre le Radiacid® 0980 et l'UDETA.

Suivant l'acide gras de départ, on obtient un composé qui peut être semi-cristallin avec une température de fusion (T_{f}) le plus souvent comprise entre 30 et 150°C et qui a une température de transition vitreuse (Tg) le plus souvent comprise entre -50 °C et 20°C.

Ce composé est alors mis à réagir, dans la seconde étape du procédé selon l'invention, avec un composé au moins bifonctionnel (C), de telle manière que les fonctions de (C) réagissent avec les secondes fonctions, c'est-à-dire les fonctions réactives restantes, du composé (A). On évitera dans cette étape de se placer dans des conditions catalytiques susceptibles de conduire à une homopolymérisation du composé (C).

Le composé (C) porte au moins deux fonctions, identiques ou différentes, choisies notamment parmi les fonctions époxy, alcool et amine.

Le composé (C) est de préférence un diépoxyde. Il peut ainsi être choisi parmi : les bisphenol A diglycidyl éther, bisphenol F diglycidyl éther, le tétrabromo bisphénol A diglycidyl éther, ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther, polypropylène glycol diglycidyl éther, polytétraméthylène glycol diglycidyl éther, résorcinol diglycidyl éther, néopentylglycol diglycidyl éther, bisphenol A polyéthylène glycol diglycidyl éther, bisphénol A polypropylèneglycol diglycidyl éther, diglycidyl ester d'acide téréphtalique, les acides gras polyinsaturés époxydés, et limonène époxydé; et leurs mélanges.

En variante, le composé (C) peut être un polyépoxyde renfermant au moins trois fonctions époxyde, choisi par exemple parmi : le triglycidyl éther d'huile de ricin, le 1,1,1-tris(hydroxyméthyl)propane triglycidyl éther, le trisphénol triglycidyl éther, le glycérol tridlycidyl éther, le glycérol propoxylate triglycidyl éther, le glycérol éthoxylate triglycidyl éther, le triméthylol propane triglycidyl éther, le sorbitol polyglycidyl éther, le polyglycérol polyglycidyl éther, le pentaérythritolpolyglycidyl éther, le poly(glycidyl acrylate), le polyglycidyl méthacrylate, les acides gras polyinsaturés époxydés, les huiles végétales époxydées, les huiles de poisson époxydées et leurs mélanges.

En variante encore, le composé (C) peut être un diol. Dans ce cas, le composé (C) peut être choisi parmi : l'éthylène glycol, le propylène glycol, le tétraméthylène glycol, l'hexaméthylène glycol, l'octanediol, le nonanediol, le décanediol, le diéthylène glycol, le dipropylène glycol, le triéthylène glycol, le tétraéthylène glycol, le polyéthylène glycol, le polypropylène glycol, le polytétraméthylène glycol, les polyesters à extrémités hydroxy, polybutadiènes à extrémités hydroxy, polydiméthylsiloxanes à extrémités hydroxy, polyisobutylènes à extrémités hydroxy, les copolymères polybutadiène-co-acrylonitrile à extrémités hydroxy, les dimères diols issus d'acides gras et leurs mélanges.

Selon une autre possibilité, le composé (C) peut être un polyol renfermant au moins trois fonctions alcool. Des exemples de tels composés sont notamment : les sucres tels que le sorbitol, le pentaérythritol, le triméthylolpropane, ainsi que le glycérol et ses dérivés éthoxylés et propoxylés, l'huile de ricin (castor oil) et les dimères diols issus d'acides gras tels le Pripol 2033 de Uniqema.

On comprend que le matériau selon l'invention comprend des ponts de liaison, de préférence amide, formés dans la première étape de son procédé de synthèse, par réaction des groupes réactifs (avantageusement amine primaire ou secondaire) du composé (B) avec des fonctions réactives, dites "premières fonctions" (avantageusement, des fonctions acide), du composé (A) et des ponts de liaison (avantageusement ester), formés dans la seconde étape de ce procédé, par réaction des fonctions réactives (de préférence acides) restantes, dites "secondes fonctions", du composé (A) avec des fonctions réactives (avantageusement époxy) du composé (C). Ce matériau renferme également des liaisons hydrogène entre les groupements associatifs portés par les molécules qui le constituent. La présence de ces liaisons hydrogène réversibles, susceptibles d'être rompues par une élévation de température et de se reformer à température ambiante, permet au matériau selon l'invention de présenter une fluidité à l'état fondu suffisante pour être transformé par des méthodes bien connues de l'homme du métier (injection, moulage, extrusion...) et éventuellement un grand allongement à la rupture à température ambiante, sans pour autant qu'il présente une masse moléculaire élevée.

Les molécules arborescentes constituant ledit matériau renferment une fraction soluble, ainsi qu'éventuellement une fraction insoluble, c'est-à-dire une fraction représentant de 0,1 à 90% du poids du matériau et qui n'est soluble en aucune proportion dans aucun solvant. La masse moléculaire moyenne en nombre de la fraction soluble est de préférence comprise entre 300 et 300.000 g/mol, telle que mesurée par GPC.

Selon un mode de réalisation de l'invention, le nombre moyen de groupes associatifs terminaux par molécule est d'au moins 1,2, de préférence d'au moins 2, voire d'au moins 2,2.

On comprend par ailleurs que ce matériau peut renfermer des molécules autres que les molécules arborescentes décrites précédemment, en particulier dans le cas où le composé (A) renferme des trimères d'acides gras mélangés à des mono- et/ou dimères d'acides gras. Avantageusement, le matériau selon l'invention renferme au moins 25% et, mieux, au moins 50% en nombre desdites molécules arborescentes.

On préfère selon l'invention que ce matériau renferme également des liaisons hydrophobes intermoléculaires, avantageusement dues à des interactions entre des groupes alkyle portés par chacune des molécules arborescentes décrites précédemment. Par "alkyle", on entend au sens de l'invention des groupes latéraux (CₙH₂ₙ₊₁) et non pas des chaînes alkylène (CₙH₂ₙ), par exemple. De façon particulièrement préférée, chacune de ces molécules comporte des chaînes alkyle en C₆-C₂₄, de préférence encore en C₆-C₂₀, avantageusement en plus grand nombre que lesdits groupes associatifs terminaux. Ils peuvent notamment être apportés par les composés (A), en particulier lorsqu'il s'agit de trimères d'acides gras.

Les composés (A), (B) et (C) décrits précédemment peuvent être introduits, dans le procédé selon l'invention, à l'état fondu ou par voie solvant.

Les proportions de (A), (B) et (C) utilisées dans le procédé selon l'invention déterminent les caractéristiques mécaniques du matériau selon l'invention.

Le matériau tel que défini ci-dessus présente de grandes capacités d'absorption des chocs sur une large gamme de température.

IL présente ainsi de préférence une tangente Delta supérieure à 0,5, à une fréquence d'au moins 50 Hz, et de préférence supérieure ou égale à 100 Hz, sur une gamme de température allant de 20 à 50°C et même, pour certains matériaux, sur une gamme de température allant de -5°C à 80°C ou plus.

Avantageusement le matériau présente en outre, des propriétés élastomères, c'est-à-dire la propriété de pouvoir être soumis à une déformation uniaxiale à température ambiante et de recouvrer, une fois cette contrainte relâchée, sa dimension initiale, avec une déformation rémanente inférieure à 10% et de préférence inférieure à 5% de sa dimension initiale, selon la déformation appliquée initialement.

On préfère par ailleurs que le matériau selon l'invention présente des propriétés d'auto-réparation. Par ce terme, on entend la capacité du matériau, après une coupure comme celle résultant d'une élongation allant jusqu'à la rupture ou telle que celle pratiquée par des ciseaux ou un autre outil tranchant ou cisaillant, ou encore toute autre méthode de coupure sans contact comme la coupure laser, suivie d'une mise en contact à température ambiante des faces du matériau où s'est produite la rupture, de se ressouder et de pouvoir être à nouveau soumis à une traction.

Comme rappelé ci-dessus, les proportions, et la nature de (A), (B) et (C) utilisées dans le procédé selon l'invention déterminent les caractéristiques mécaniques du matériau selon l'invention.

On préfère par conséquent que le matériau selon l'invention soit tel que :
- le composé (A) porte au moins trois fonctions, identiques ou différentes, choisies parmi les fonctions acide, ester ou chlorure d'acyle,
- le composé (B) porte au moins un groupe réactif choisi parmi les groupes amine primaire ou secondaire ou alcool, et
- le composé (C) porte au moins deux fonctions identiques ou différentes choisies parmi les fonctions époxy, alcool et amine.

On préfère encore que le matériau selon l'invention soit tel que :
- le composé (A) est un trimère de l'un au moins des acides suivants : l'acide undécylénique, l'acide myristoléique, l'acide palmitoléique, l'acide oléique, l'acide linoléique, l'acide linolénique, l'acide ricinoléique, l'acide eicosénoïque, l'acide docosénoïque, l'acide eicosapentaénoïque et l'acide docosahexaénoïque,
- le composé (B) est choisi parmi : la 2-aminoéthylimidazolidone (UDETA), 1-(2-[(2-aminoéthyl)amino]éthyl)imidazolidone (UTETA), la 1-(2-{2-[(2-aminoéthylamino]éthyl}amino) éthyl]imidazolidone (UTEPA), le 3-amino-1,2,4-triazole et le 4-amino-1,2,4-triazole, et
- le composé (C) est choisi parmi : les bisphenol A diglycidyl éther, bisphenol F diglycidyl éther, le tétrabromo bisphénol A diglycidyl éther, ou les hydroquinone diglycidyl éther, éthylène glycol diglycidyl éther, propylènre glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther, polypropylène glycol diglycidyl éther, polytétraméthylène glycol diglycidyl éther, résorcinol diglycidyl éther, néopentyl glycol diglycidyl éther, bisphenol A polyéthylène glycol diglycidyl éther, bisphénol A polypropylèneglycol diglycidyl éther, diglycidyl ester d'acide téréphtalique, le triglycidyl éther d'huile de ricin, le 1,1,1-tris(hydroxyméthyl)propane triglycidyl éther, le trisphénol triglycidyl éther, le glycérol triglycidyl éther, le glycérol propoxylate triglycidyl éther, le glycérol éthoxylate triglycidyl éther, le triméthylol propane triglycidyl éther, le sorbitol polyglycidyl éther, le polyglycérol polyglycidyl éther, le pentaérythritolpolyglycidyl éther, le poly(glycidyl acrylate), le polyglycidyl méthacrylate, les acides gras polyinsaturés époxydés, les huiles végétales époxydées, les huiles de poisson époxydées, le limonène époxydé et leurs mélanges

Les capacités d'absorption des chocs du matériau peuvent être ajustées par le choix du composé C, pour une proportion donnée des composées A, B et C. Ainsi, les capacités d'absorption des chocs du matériau, sont très importantes lorsque le composé C est choisi parmi : l'huile de soja époxydée, le bisphenol A diglycidyl éther, le bisphenol F diglycidyl éther.

Le matériau, peut notamment être utilisé pour fabriquer tout type d'objet destiné à amortir les chocs ou les vibrations, tels que des tampons et pare-chocs pour véhicules terrestres, notamment les trains, les camions, les voitures, les chariots y compris les chariots élévateurs, mais également des gardes pour bateaux, des tapis de jeu, des gilets pare-balles, des cibles de tir notamment pour flèches, balles, et fléchettes, des protections sportives notamment protège-jambes, coudières, gants, des garnitures pour combinaisons sportives et casques de protection, des éléments de protection pour conduites et canalisations.

Dans ces applications, le matériau selon l'invention peut être utilisé en tant que tel ou dans des mélanges monophasiques ou polyphasiques, avec un ou plusieurs composés tels que les coupes pétrolières, les solvants, les charges minérales et organiques, les plastifiants, les résines tackifiantes, les anti-oxydants, les pigments et/ou les colorants, par exemple, dans des émulsions, des suspensions ou des solutions.

L'invention sera mieux comprise à la lumière des exemples suivants, donnés à des fins d'illustration seulement et qui n'ont pas pour but de restreindre la portée de l'invention, définie par les revendications annexées.

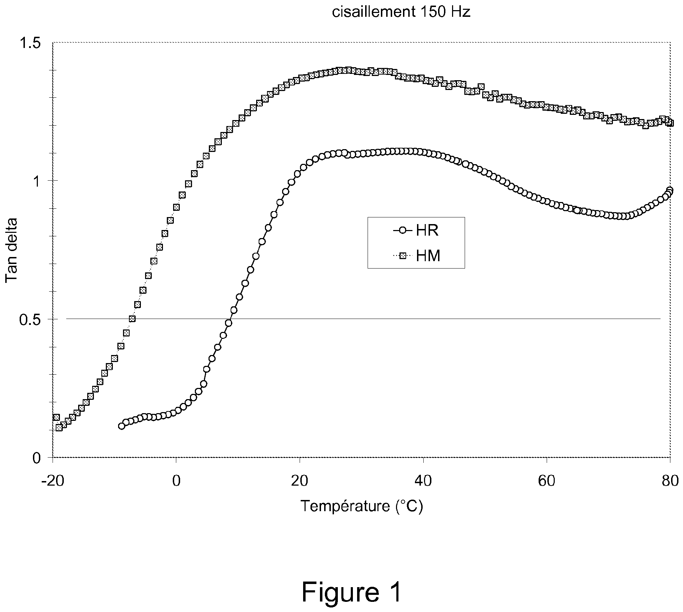

L'invention est également illustrée par la figure 1 qui représente l'évolution de la tangente delta des produits de l'exemple 4 (HR) et de l'exemple 5 (HM) en fonction de la température en °C pour un cisaillement à 150 Hz.

### EXEMPLES

### Exemple 1 : Préparation d'un matériau selon l'invention

Dans un réacteur en verre de 4 litres muni d'une agitation mécanique, d'une sonde de température, d'une arrivée d'azote via un tube plongeur, d'une ampoule de coulée, d'un Dean Stark surmonté par un condenseur et d'un chauffe-ballon, on a introduit 1300 g d'un trimère d'acides gras (Pripol^{®} 1040, indice d'acide=188 (mg de KOH/g), soit 4,36 mol de fonctions acide). On a introduit dans l'ampoule de coulée 299 g de 2-aminoéthyl-imidazolinone (UDETA, indice d'alcalinité=7,3 meq/g soit 2,18 mol, 0,5 équivalent) à l'état fondu. On a chauffé le réacteur à 80°C, puis sous agitation et sous flux d'azote, on a coulé l'UDETA sur une période de 10 minutes. On a monté progressivement la température à 180°C sur une période de 4 heures, puis on a laissé réagir 2 heures à 180°C. La quantité d'eau récupérée était de 39 g (2,18 mol). On a laissé refroidir à 130°C pour récupérer 1475 g d'un liquide visqueux marron qui se solidifiait à température ambiante. L'indice d'acide (mg KOH/g de produit nécessaires à neutraliser les groupes acides) du produit obtenu était de 67,5 mg de KOH/g.

On a alors placé 7,5g de ce produit dans un gobelet en PTFE de diamètre 5 cm, avec 1,73g d'Araldite^{®} LY556 (prépolymère époxy DGEBA avec un nombre moyen de groupements hydroxyle par molécule de n=0,15 soit une masse moléculaire moyenne en nombre Mn=382,6). Après échauffement du gobelet à 150°C, le mélange a été homogénéisé à l'aide d'une spatule puis versé dans un moule en PTFE de diamètre 8 cm, maintenu 1 heure à 150°C puis 48 heures à 125°C. Le moule a alors été refroidi jusqu'à température ambiante. Après démoulage, on a obtenu un film flexible de matériau dit RH-4, d'épaisseur environ 1mm au centre. Après découpage à l'aide d'une lame de rasoir, on a constaté que ce film se réparait spontanément lorsque les morceaux étaient remis en contact dans un délai de moins d'une heure.

### Exemple 2 : Préparation d'un matériau selon l'invention

Le mode opératoire était le même que dans l'exemple 1 en utilisant 1625 g de Pripol^{®} 1040 (indice d'acide=188 mg de KOH/g, soit 5,46 mol de fonctions acide) et 224,4 g d'UDETA (1,64 mol, 0,3 équivalent). On a récupéré 26,5 g d'eau (1,64 mol) et 1770 g d'un liquide visqueux marron qui solidifiait à température ambiante. L'indice d'acide du produit était de 105,8 mg de KOH/g.

On a alors placé 7,75g de ce produit dans un moule en PTFE de diamètre 8 cm, avec 2,8 g d'Araldite^{®} LY556. Après échauffement du moule à 150°C, le mélange a été homogénéisé à l'aide d'une spatule, maintenu 1 heure à 150°C puis 48 heures à 125°C. Le moule a alors été refroidi jusqu'à température ambiante. Après démoulage, on a obtenu un film flexible ayant une épaisseur d'environ 1,5 mm au centre. Après découpage à l'aide d'une lame de rasoir, on a constaté que ce film se réparait spontanément lorsque les morceaux étaient remis en contact dans un délai de moins d'une heure.

### Exemple 3 : Préparation d'un matériau selon l'invention

Dans un ballon tricol de 50 ml équipé d'un agitateur magnétique chauffant, d'une arrivée de gaz et d'un raccord permettant la mise sous vide, on a versé 5,62 g de mélange dimère/trimère d'acide Unidyme^{®} 60, et 1,40 g de 2-aminoéthylimidazolidinone (UDETA) de pureté molaire supérieure à 95%. On a chauffé le mélange, balayé par un flux d'azote, à 180°C pendant 12 heures. Régulièrement, on a appliqué un vide léger avec une trompe à eau afin d'éliminer l'eau dissoute dans le milieu. Le mélange liquide a été refroidi à 150°C, on a alors ajouté 1,91 g de résine époxy Araldite^{®} LY556. Après 45 min de séjour à 150°C, le mélange a été coulé dans un moule en PTFE de diamètre 8 cm et placé à l'étuve à 125°C pendant 48 heures.

L'échantillon obtenu après démoulage se présentait sous la forme d'un film élastique de 1,6 mm d'épaisseur.

### Exemple 4 : Préparation d'un matériau selon l'invention

Dans un réacteur Schott de volume utile 4000 ml, posé sur un chauffe ballon électrique et équipé d'une sonde de température, d'une agitation mécanique avec un mobile de type ancre en poly tetrafluoro éthylène, d'une ampoule de coulée, d'un réfrigérant condenseur, d'un Dean-Stark et d'une entrée d'azote terminée par une canne plongente en poly tétra fluoro éthylène, on introduit 1000 g de Pripol® 1040 de Uniqema® (indice d'acide 186), soit 3,32 mole d'acide carboxylique et 245 g d'UDETA à 87,6% de pureté en poids soit 1,66 mole d'amine). On suppose que les impuretés de l'UDETA peuvent apporter l'équivalent de 0,13 mol supplémentaires. Le mélange est chauffé à 170°C pour éliminer l'eau de condensation. Lorsque l'eau de condensation est éliminée et piégée dans le Dean-stark, le milieu est réfroidi à 80°C. A 80°C, on ajoute 294 g d'une résine époxy de type DGEBA, l'Epikote® 828 EL de Resolution® (taux d'époxy de 5,2 mol/kg), soit 1,53 mol et on laisse sous agitation à 80°C pendant 15 minutes. Le produit ainsi obtenu est vidé du réacteur et peut-être stocké sans cuisson dans des pots de polypropylène. Pour obtenir le matériau final absorbant les chocs, une cuisson en étuve à 120°C pendant 24 heures est effectuée, dé préférence en couche de 5 mm d'épaisseur dans un support non-adhérent, comme des plateaux récouverts de poly tétra fluoroéthylène.

### Exemple 5 : Préparation d'un matériau selon l'invention

Dans un réacteur Schott de volume utile 4000 ml, posé sur un chauffe ballon électrique et équipé d'une sonde de température, d'une agitation mécanique avec un mobile de type ancre en poly tetrafluoro éthylène, d'une ampoule de coulée, d'un réfrigérant condenseur, d'un Dean-Stark et d'une entrée d'azote terminée par une canne plongeante en poly tétra fluoro éthylène, on introduit 1000 g de Pripol® 1040 de Uniqema (indice d'acide 186), soit 3,32 mole d'acide carboxylique et 245 g d'UDETA à 87,6% de pureté en poids soit 1,66 mole d'amine). On suppose que les impuretés de l'UDETA peuvent apporter l'équivalent de 0,13 mol supplémentaire. Le mélange est chauffé à 170°C pour éliminer l'eau de condensation. Lorsque l'eau de condensation est éliminée et piégée dans le Dean-stark, le milieu est refroidi à 120°C. A 120°C, on ajoute 414 g d'huile de soja époxydé Ecepox® PB 3 d'Arkema (taux d'époxy de 3,7 mol/kg), soit 1,53 mol et on laisse sous agitation à 120°C pendant 15 minutes. Le produit ainsi obtenu est vidé du réacteur et peut-être stocké sans cuisson dans des pots de polypropylène. Pour obtenir le matériau élastomérique hybride final, une cuisson en étuve à 120°C pendant 48 heures est effectuée, dé préférence en couche de 5 mm d'épaisseur dans un support non-adhérent, comme des plateaux récouverts de poly tétra fluoroéthylène. Le produit est collant et peut-être talqué en surface pour faciliter sa manipulation et notamment, la mesure de propriétés mécaniques.

### Exemple 6 : Essais mécaniques

Des éprouvettes en forme d'haltères aux dimensions suivantes: longueur totale: 35 mm, largeur totale: 6,5 mm, longueur de la zone centrale: 10 mm, largeur de la zone centrale: 2 mm, épaisseur: 1,6 mm, ont été obtenues par poinçonnage à l'aide d'un emporte-pièce du film obtenu à l'Exemple 3.
- Les tests de traction ont été réalisés à 25°C à l'aide d'une machine de traction Instron^{®}, équipée d'un capteur de force de 10 N, à la vitesse de 2mm/min Ils ont donné les résultats suivants:
   Déformation à la rupture: 427 %
   Contrainte à la rupture: 0,65 MPa
- En utilisant la même machine, un test de déformation rémanente à l'allongement a été réalisé à 25°C comme suit: l'éprouvette a été marquée de deux traits de part et d'autre de la zone centrale, l'image de l'éprouvette a été enregistrée à l'aide d'un scanner avec une résolution de 600 dpi et la distance entre les deux traits a été mesurée sur l'image, puis l'éprouvette a été soumise à un allongement à la vitesse de 2mm/min jusqu'à une déformation de 200%. Ensuite, la déformation de 200% a été maintenue pendant 1 heure. Après quoi, l'éprouvette a été détachée des mors puis laissée au repos pendant 12 heures à 25°C. La distance entre les deux traits a alors été de nouveau mesurée de la même manière que précédemment.
   Distance entre traits avant allongement : 12,5 mm
   Distance entre traits après allongement : 12,9 mm soit une déformation rémanente de 3%.
- Des tests d'autoréparation à 25°C ont été réalisés comme suit: l'éprouvette a d'abord été coupée en son centre à l'aide d'une lame de rasoir. Après un temps t1, les deux surfaces ont été remises en contact manuellement. On a constaté qu'elles adhéraient aussitôt l'une à l'autre. L'éprouvette a alors été laissée au repos pendant un temps t2. Après quoi, un test de traction jusqu'à rupture a été réalisé dans les conditions mentionnées plus haut.

On a enregistré les résultats suivants:

| Echantillon | t1 (min) | t2 (min) | Contrainte maximale avant rupture (MPa) | Allongement à la rupture (%) |
|---|---|---|---|---|
| 1 | 10 | 1 | 0,10 | 189 |
| 2 | 10 | 3 | 0,16 | 234 |
| 3 | 10 | 14 | 0,19 | 280 |

Cet exemple montre qu'après autoréparation, l'échantillon était de nouveau capable de supporter des déformations considérables avant rupture. Cet exemple montre aussi que la qualité de l'autoréparation s'améliore à mesure que le temps t2 augmente.

### Exemple 7 (comparatif) : Synthèse et propriétés mécaniques d'un matériau

Dans un ballon de 100 mL muni d'un agitateur magnétique et d'un bain chauffant, on a placé 3,82g de résine époxy Araldite^{®} LY556 + 5,60g de trimère d'acide Unidyme^{®} 60. Le mélange a été chauffé à 160°C avec agitation jusqu'à devenir miscible puis coulé dans un moule en PTFE de diamètre 80 mm et enfin mis à l'étuve à 125°C pendant 48 heures. On a obtenu un film flexible ayant une épaisseur d'environ 1,35mm. Par spectroscopie infrarouge, on constatait:
- une disparition de la bande v_{C=O} de l'acide à 1707 cm⁻¹
- une disparition de la bande vₐ de l'époxy à 914 cm⁻¹
- une apparition de la bande v_{C=O} de l'ester à 1736 cm⁻¹

Sur ce film on a réalisé les tests mécaniques dans les mêmes conditions que précédemment.

Le test de traction donnait les résultats suivants:
Elongation à la rupture : 195%
Contrainte à la rupture : 5,5 MPa

On a réalisé un test d'autoréparation à 25°C de la même manière que dans l'exemple 4.

Avec les temps t₁=10 minutes et t₂=3 heures, on a enregistré les résultats suivants:
Elongation à la rupture : 5,1%
Contrainte maximale avant rupture : 0,07 MPa.

Cet exemple montre que la propriété d'autoréparation n'est pas observée dans le cas d'un réseau constitué de macromolécules réticulées chimiquement mais dépourvu de liaisons hydrogène intermoléculaires.

### Exemple 8 : Synthèse et propriétés mécaniques d'un matériau selon l'invention

Dans un réacteur Schott de 500ml, muni d'une agitation mécanique, d'un réfrigérant, d'un Dean-Stark, d'une arrivée d'azote, d'une ampoule de coulée et d'une sonde de température, on a introduit 150g de Pripol^{®} 1040 (provenance Uniqema, indice d'acide=188, soit 0,504 mol de fonctions acide). Après chauffage à 80°C, on a introduit, via l'ampoule de coulée, 36,5 g d'UDETA (provenance Arkema, indice d'alcalinité=6,9 meq/g, soit 0,252 mol de fonctions amine). Après chauffage à 160°C pendant 5 heures sous flux d'azote, on a éliminé l'eau formée dans le Dean-Stark. On a alors laissé redescendre la température à 145°C, puis on a ajouté 62,9g d'huile de soja époxydée (Ecepox PB1, provenance Arkema, indice d'époxyde=4mmol/g, soit 0,252 mol de fonctions époxyde) et on a laissé réagir pendant 15 minutes à 145-150°C. Le mélange réactionnel a été coulé dans un plateau en Teflon^{®}, qui a été placé dans une étuve à 120°C pendant 40 heures.

Le produit ainsi obtenu a été saupoudré de talc pour mieux permettre sa manipulation et son démoulage du plateau. Une fois le produit démoulé, l'autre surface (celle en contact avec le plateau) a été talquée à son tour. Des rubans de 8 cm de longueur par 1 cm de largeur et 2 mm d'épaisseur ont été découpés en vue de réaliser des tests mécaniques. Des marques au crayon distantes de 4 cm ont été faites sur l'échantillon (2 cm de chaque côté du centre en longueur). L'échantillon a ensuite été déformé manuellement jusqu'à ce que les marques soient éloignées de 14 cm, ce qui correspondait à une déformation de 250%. L'échantillon a été posé sur une table et son retour élastique a été observé. 5 minutes après avoir relâché l'échantillon, la distance entre les marques était revenue à 4,2 cm. Une demi-heure après, l'échantillon avait complètement récupéré ses dimensions d'origine et la distance entre les marques était revenue à 4 cm, ce qui correspondait à 0% de déformation résiduelle.

Cet exemple illustre les propriétés élastomériques des matériaux selon l'invention.

### Exemple 9 : propriétés d'absorption des chocs d'un matériau selon l'invention

Mesure du comportement amortissant du produit obtenu selon l'exemple 4 (HR) et du produit obtenu selon l'exemple 5 (HM) selon Tan Delta à 150 Hz (fréquence élevée représentative de la sollicitation rencontrée par un matériau lors de la chute d'un objet à sa surface)

Les mesures des modules mécaniques dynamiques permettant de calculer tan delta comme le rapport G" /G' ont été réalisées à l'aide d'une DMA Q800 de TA Instruments, les tests ont été effectués en cisaillement, de 80°C à 0°C en refroidissant à 2°C/min.

Le résultat de cette mesure est présenté sur la figure 1.

On constate que de -7°C jusqu'à, au minimum, 80°C, le produit selon l'exemple 5 (HM) présente une tangente delta supérieure à 0,5. Pour le produit selon l'exemple 4 (HR), tangente delta est supérieure à 0,5 à partir de 9°C, jusqu'à, au minimum, 80°C.

## Revendications

1. Utilisation des capacités d'amortissement d'un matériau comprenant des molécules arborescentes constituées chacune de fragments au moins bifonctionnels et de fragments au moins trifonctionnels unis les uns aux autres par des ponts ester ou thioester, seuls ou en combinaison avec des ponts amide ou urée, lesdits ponts étant formés à partir de deux fonctions portées par des fragments différents, lesdites molécules comportant en outre, sur les fragments situés aux extrémités des arborescences, des groupes associatifs terminaux capables de s'associer les uns aux autres par des liaisons hydrogène et reliés de façon covalente aux fonctions ne participant pas auxdits ponts.

2. Utilisation selon la revendication 1, **caractérisée en ce que** lesdites molécules arborescentes comportent en outre chacune des chaînes alkyle en C₆-C₂₀, de préférence en plus grand nombre que lesdits groupes associatifs terminaux.

3. Utilisation selon la revendication 1 ou 2 **caractérisée en ce qu'**il renferme au moins 25% et de préférence au moins 50% en nombre en nombre desdites molécules arborescentes.

4. Utilisation selon l'une quelconque des revendications précédentes **caractérisée en ce que** les groupes associatifs sont choisis parmi les groupes imidazolidonyle, triazolyle, triazinyle, bis-uréyle, uréido-pyrimidyle.

5. Utilisation selon l'une quelconque des revendications précédentes ledit matériau étant susceptible d'être obtenu selon le procédé comprenant les étapes successives suivantes :
(a) la réaction d'au moins un composé au moins trifonctionnel (A) porteur de premières et secondes fonctions avec au moins un composé (B) portant, d'une part, au moins un groupe réactif susceptible de réagir avec les premières fonctions de (A) et, d'autre part, au moins un groupe associatif, de préférence dans un rapport en nombre des groupes réactifs du composé (B) à la somme des premières fonctions du composé (A) allant de 0,1 à 0,8 et de préférence de 0,3 à 0,8 ;
(b) la réaction du ou des composé(s) obtenu(s) à l'étape (a) avec au moins un composé au moins bifonctionnel (C) dont les fonctions sont susceptibles de réagir avec les secondes fonctions du composé (A) pour former des ponts ester ou thioester, seuls ou en combinaison avec des ponts amide ou urée.

6. Utilisation selon la revendication 5, **caractérisée en ce que** :
- le composé (A) porte au moins trois fonctions, identiques ou différentes, choisies parmi les fonctions acide, ester ou chlorure d'acyle,
- le composé (B) porte au moins un groupe réactif choisi parmi les groupes amine primaire ou secondaire ou alcool, et
- le composé (C) porte au moins deux fonctions identiques ou différentes choisies parmi les fonctions époxy, alcool et amine.

7. Utilisation selon la revendication 5 ou 6, **caractérisée en ce que** le composé (A) est un trimère d'acide gras d'origine végétale.

8. Utilisation selon l'une quelconque des revendications 5 à 7, **caractérisée en ce que** le composé (B) répond à la formule (B1), (B2) ou (B3) : 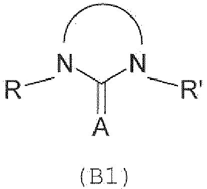 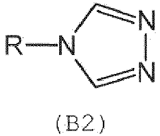 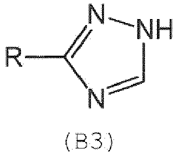 où :
R désigne un motif contenant au moins un groupe amine primaire ou secondaire ou alcool,
R' désigne un atome d'hydrogène,
A désigne un atome d'oxygène ou de soufre ou un groupement -NH, de préférence un atome d'oxygène.

9. Utilisation selon la revendication 6, **caractérisée en ce que** le composé (B) est choisi parmi :
la 2-aminoéthylimidazolidone (UDETA), 1-(2-[(2-aminoéthyl)amino]éthyl)imidazolidone (UTETA), la 1-(2-{2-[(2-aminoéthylamino]éthyl}amino)éthyl]imidazolidone (UTEPA), le 3-amino-1,2,4-triazole et le 4-amino-1,2,4-triazole.

10. Utilisation selon la revendication 6, **caractérisée en ce que** le composé (C) est choisi parmi :
les bisphenol A diglycidyl éther, bisphenol F diglycidyl éther, le tétrabromo bisphénol A diglycidyl éther, ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther, polypropylène glycol diglycidyl éther, polytétraméthylène glycol diglycidyl éther, résorcinol diglycidyl éther, néopentylglycol diglycidyl éther, bisphenol A polyéthylène glycol diglycidyl éther, bisphénol A polypropylèneglycol diglycidyl éther, diglycidyl ester d'acide téréphtalique, le triglycidyl éther d'huile de ricin, le 1,1,1-tris(hydroxyméthyl)propane triglycidyl éther, le trisphénol triglycidyl éther, le glycérol tridlycidyl éther, le glycérol propoxylate triglycidyl éther, le glycérol éthoxylate triglycidyl éther, le triméthylol propane triglycidyl éther, le sorbitol polyglycidyl éther, le polyglycérol polyglycidyl éther, le pentaérythritolpolyglycidyl éther, le poly(glycidyl acrylate), le polyglycidyl méthacrylate, les acides gras polyinsaturés époxydés, les huiles végétales époxydées, les huiles de poisson époxydées et le limonène époxydé et leurs mélanges.

11. Utilisation selon la revendication 6, **caractérisée en ce que** le composé (C) est choisi parmi :
l'éthylène glycol, le propylène glycol, le tétraméthylène glycol, l'hexaméthylène glycol, l'octanediol, le nonanediol, le décanediol, le diéthylène glycol, le dipropylène glycol, le triéthylène glycol, le tétraéthylène glycol, le polyéthylène glycol, le polypropylène glycol, le polytétraméthylène glycol, les polyesters à extrémités hydroxyl, polybutadiènes à extrémités hydroxy, polydiméthylsiloxanes à extrémités hydroxy, polyisobutylènes à extrémités hydroxy, les copolymères polybutadiène-co-acrylonitrile à extrémités hydroxy, les dimères diols issus d'acides gras et leurs mélanges.

12. Utilisation d'un matériau selon l'une quelconque des revendications précédentes pour fabriquer des objets choisis parmi des tampons et pare-chocs pour véhicules terrestres, notamment les trains, les camions, les voitures, les chariots y compris les chariots élévateurs, des gardes pour bateaux, des tapis de jeu, des gilets pare-balles, des cibles de tir notamment pour flèches, balles, et fléchettes, des protections sportives notamment protège-jambes, coudières, et gants, des garnitures pour combinaisons sportives et casques de protection, des éléments de protection pour conduites et canalisations.

## Patentansprüche

1. Verwendung des Dämpfungsvermögens eines Werkstoffs, der arboreszente Moleküle umfasst, die jeweils aus mindestens bifunktionellen Fragmenten und mindestens trifunktionellen Fragmenten bestehen, die miteinander nur durch Ester- oder Thioesterbrücken oder in Kombination mit Amid- oder Harnstoffbrücken verbunden sind, wobei diese Brücken ausgehend von zwei Funktionen gebildet werden, die von verschiedenen Fragmenten getragen werden, wobei die Moleküle außerdem an den Fragmenten, die sich an den Enden der Arboreszenzen befinden, endständige assoziative Gruppen tragen, die fähig sind, miteinander über Wasserstoffbindungen zu assoziieren und kovalent an die Funktionen gebunden sind, die nicht an den Brücken beteiligt sind.

2. Verwendung nach Anspruch 1, **dadurch gekennzeichnet, dass** die arboreszenten Moleküle außerdem jeweils C₆-C₂₀-Alkylketten, vorzugsweise in einer größeren Anzahl als die endständigen assoziativen Gruppen, tragen.

3. Verwendung nach Anspruch 1 oder 2, **dadurch gekennzeichnet, dass** der Werkstoff mindestens 25% und vorzugsweise mindestens 50%, bezogen auf die Anzahl, der arboreszenten Moleküle enthält.

4. Verwendung nach einem der vorhergehenden Ansprüche, **dadurch gekennzeichnet, dass** die assoziativen Gruppen aus Imidazolidonyl-, Triazolyl-, Triazinyl-, Bisureyl-, Ureidopyrimidylgruppen ausgewählt sind.

5. Verwendung nach einem der vorhergehenden Ansprüche, wobei der Werkstoff gemäß dem Verfahren erhalten werden kann, das die folgenden sukzessiven Schritte umfasst:
(a) Umsetzung von mindestens einer mindestens trifunktionellen Verbindung (A), die erste und zweite Funktionen trägt, mit mindestens einer Verbindung (B), die einerseits mindestens eine reaktive Gruppe, die mit den ersten Funktionen von (A) reagieren kann, und andererseits mindestens eine assoziative Gruppe, vorzugsweise in einem Verhältnis, bezogen auf die Anzahl der reaktiven Gruppen der Verbindung (B) zu der Summe der ersten Funktionen der Verbindung (A), von 0,1 bis 0,8 und vorzugsweise von 0,3 bis 0,8 trägt;
(b) Umsetzung der in Schritt (a) erhaltenen Verbindung(en) mit mindestens einer mindestens bifunktionellen Verbindung (C), deren Funktionen mit den zweiten Funktionen der Verbindung (A) unter Bildung von nur Ester- oder Thioesterbrücken oder in Kombination mit Amid- oder Harnstoffbrücken reagieren können.

6. Verwendung nach Anspruch 5, **dadurch gekennzeichnet, dass**:
- die Verbindung (A) mindestens drei gleiche oder verschiedene Funktionen trägt, die aus Säure-, Ester- oder Acylchloridfunktionen ausgewählt sind,
- die Verbindung (B) mindestens eine reaktive Gruppe trägt, die aus primären oder sekundären Amin- oder Alkoholgruppen ausgewählt ist, und
- die Verbindung (C) mindestens zwei gleiche oder verschiedene Funktionen trägt, die aus Epoxy-, Alkohol- und Aminfunktionen ausgewählt sind.

7. Verwendung nach Anspruch 5 oder 6, **dadurch gekennzeichnet, dass** die Verbindung (A) ein Trimer von Fettsäure pflanzlichen Ursprungs ist.

8. Verwendung nach einem der Ansprüche 5 bis 7, **dadurch gekennzeichnet, dass** die Verbindung (B) der Formel (B1), (B2) oder (B3) entspricht: 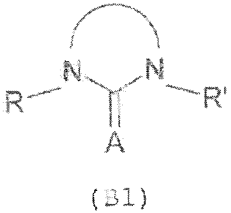 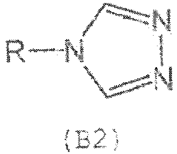 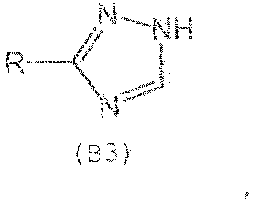 wobei:
R für ein Motiv steht, das mindestens eine primäre oder sekundäre Amin- oder Alkoholgruppe enthält,
R' ein Wasserstoffatom bedeutet,
A ein Sauerstoff- oder Schwefelatom oder eine Gruppe -NH, vorzugsweise ein Sauerstoffatom, bedeutet.

9. Verwendung nach Anspruch 6, **dadurch gekennzeichnet, dass** die Verbindung (B) aus den Folgenden ausgewählt ist:
(2-Aminoethyl)imidazolidon (UDETA), 1-(2[(2-Aminoethyl)amino]ethyl)imidazolidon (UTETA), 1-(2-{2-[(2-Aminoethylamino]ethyl}amino)ethyl]imidazolidon (UTEPA), 3-Amino-1,2,4-triazol und 4-Amino-1,2,4-triazol.

10. Verwendung nach Anspruch 6, **dadurch gekennzeichnet, dass** die Verbindung (C) aus den Folgenden ausgewählt ist:
Bisphenol A-diglycidylether, Bisphenol F-diglycidylether, Tetrabrombisphenol A-diglycidylether oder Hydrochinondiglycidylether, Ethylenglykoldiglycidylether, Propylenglykoldiglycidylether, Butylenglykoldiglycidylether, Neopentylglykoldiglycidylether, 1,4-Butandioldiglycidylether, 1,6-Hexandioldiglycidylether, Cyclohexandimethanoldiglycidylether, Polyethylenglykoldiglycidylether, Polypropylenglykoldiglycidylether, Polytetramethylenglykoldiglycidylether, Resorcinoldiglycidylether, Neopentylglykoldiglycidylether, Bisphenol A-polyethylenglykoldiglycidylether Bisphenol A-polypropylenglykoldiglycidylether, Terephthalsäurediglycidylester, Rizinusöltriglycidylether, 1,1,1-Tris(hydroxymethyl)propantriglycidylether, Trisphenoltriglycidylether, Glycerintriglycidylether, Glycerinpropoxylattriglycidylether, Glycerinethoxylattriglycidylether, Trimethylolpropantriglycidylether, Sorbitpolyglycidylether, Polyglycerinpolyglycidylether, Pentaerythritpolyglycidylether, Poly(glycidylacrylat), Polyglycidylmethacrylat, epoxidierten mehrfach ungesättigten Fettsäuren, epoxidierten Pflanzenölen, epoxidierten Fischölen und epoxidiertem Limonen sowie deren Gemischen.

11. Verwendung nach Anspruch 6, **dadurch gekennzeichnet, dass** die Verbindung (C) aus den Folgenden ausgewählt ist:
Ethylenglykol, Propylenglykol, Tetramethylenglykol, Hexamethylenglykol, Octandiol, Nonandiol, Decandiol, Diethylenglykol, Dipropylenglykol, Triethylenglykol, Tetraethylenglykol, Polyethylenglykol, Polypropylenglykol, Polytetramethylenglykol, Polyestern mit endständigen Hydroxygruppen, Polybutadienen mit endständigen Hydroxygruppen, Polydimethylsiloxanen mit endständigen Hydroxygruppen, Polyisobutylenen mit endständigen Hydroxygruppen, Polybutadien-Co-Acrylnitril-Copolymeren mit endständigen Hydroxygruppen, aus Fettsäuren herrührenden Dioldimeren und deren Gemischen.

12. Verwendung eines Werkstoffs nach einem der vorhergehenden Ansprüche zur Herstellung von Gegenständen, die aus Puffern und Stoßstangen für Bodenfahrzeuge, insbesondere Eisenbahnen, Lastwagen, Autos, Transportwagen, einschließlich Gabelstaplern, Trossen für Boote, Spielmatten, kugelsicheren Westen, Schießscheiben, insbesondere für Pfeile, Kugeln und Wurfpfeile, Sportschutzausrüstung, insbesondere Beinschoner, Ellbogenschoner und Handschuhe, Verstärkungen für Sportkombinationen und Schutzhelme, Schutzkomponenten für Rohrleitungen und Kanäle ausgewählt sind.

## Claims

1. Use of the clamping capabilities of a material comprising arborescent molecules each composed of at least bifunctional fragments and of at least trifunctional fragments jointed to one another via ester or thioester bridges, alone or in combination with amide or urea bridges, said bridges being formed from two functional groups carried by different fragments, said molecules additionally comprising, on the fragments situated at the ends of the arborescences, end associative groups capable of combining with one another via hydrogen bonds and connected covalently to the functional groups not participating in said bridges.

2. Use according to Claim 1, **characterized in that** said arborescent molecules each additionally comprise C₆-C₂₀ alkyl chains, preferably in a greater number than said end associative groups.

3. Use according to Claim 1 or 2, **characterized in that** the material includes at least 25% by number and preferably at least 50% by number of said arborescent molecules.

4. Use according to any one of the preceding claims, **characterized in that** the associative groups are chosen from imidazolidonyl, triazolyl, triazinyl, bis-ureyl and ureido-pyrimidyl groups.

5. Use according to any one of the preceding claims, said material being capable of being obtained according to the process comprising the following successive stages:
(a) the reaction of at least one at least trifunctional compound (A) carrying first and second functional groups with at least one compound (B) carrying, on the one hand, at least one reactive group capable of reacting with the first functional groups of (A) and, on the other hand, at least one associative group, preferably in a ratio by number of the reactive groups of the compound (B) to the sum of the first functional groups of the compound (A) ranging from 0.1 to 0.8 and preferably from 0.3 to 0.8;
(b) the reaction of the compound(s) obtained in stage (a) with at least one at least bifunctional compound (C), the functional groups of which are capable of reacting with the second functional groups of the compound (A) in order to form ester or thioester bridges, alone or in combination with amide or urea bridges.

6. Use according to Claim 5, **characterized in that**:
- the compound (A) carries at least three identical or different functional groups chosen from acid, ester or acyl chloride functional groups,
- the compound (B) carries at least one reactive group chosen from alcohol or primary or secondary amine groups, and
- the compound (C) carries at least two identical or different functional groups chosen from epoxy, alcohol and amine functional groups.

7. Use according to Claim 5 or 6, **characterized in that** the compound (A) is a trimer of fatty acid of vegetable origin.

8. Use according to any one of Claims 5 to 7, **characterized in that** the compound (B) corresponds to the formula (B1), (B2) or (B3): 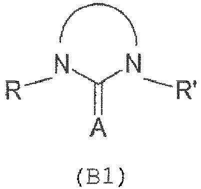 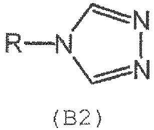 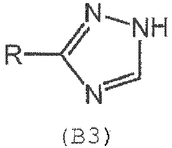 where:
R denotes a unit comprising at least one alcohol or primary or secondary amine group,
R' denotes a hydrogen atom,
A denotes an oxygen or sulfur atom or an -NH group, preferably an oxygen atom.

9. Use according to Claim 6, **characterized in that** the compound (B) is chosen from: (2-aminoethyl)imidazolidone (UDETA), 1-(2-[(2-aminoethyl)amino]ethyl)imidazolidone (UTETA), 1-[2-({2-[(2-amino-ethyl)amino]ethyl}amino)ethyl]imidazolidone (UTEPA), 3-amino-1,2,4-triazole and 4-amino-1,2,4-triazole.

10. Use according to Claim 6, **characterized in that** the compound (C) is chosen from: bisphenol A diglycidyl ether, bisphenol F diglycidyl ether, tetrabromobisphenol A diglycidyl ether, or hydroquinone diglycidyl ether, ethylene glycol diglycidyl ether, propylene glycol diglycidyl ether, butylene glycol diglycidyl ether, neopentyl glycol diglycidyl ether, 1,4-butanediol diglycidyl ether, 1,6-hexanediol diglycidyl ether, cyclohexanedimethanol diglycidyl ether, polyethylene glycol diglycidyl ether, polypropylene glycol diglycidyl ether, polytetramethylene glycol diglycidyl ether, resorcinol diglycidyl ether, neopentyl glycol diglycidyl ether, bisphenol A polyethylene glycol diglycidyl ether, bisphenol A polypropylene glycol diglycidyl ether, terephthalic acid diglycidyl ester, castor oil triglycidyl ether, 1,1,1-tris(hydroxymethyl)propane triglycidyl ether, trisphenol triglycidyl ether, glycerol triglycidyl ether, glycerol propoxylate triglycidyl ether, glycerol ethoxylate triglycidyl ether, trimethylolpropane triglycidyl ether, sorbitol polyglycidyl ether, polyglycerol polyglycidyl ether, pentaerythritol polyglycidyl ether, poly(glycidyl acrylate), polyglycidyl methacrylate, epoxidized polyunsaturated fatty acids, epoxidized vegetable oils, epoxidized fish oils, epoxidized limonene and their mixtures.

11. Use according to Claim 6, **characterized in that** the compound (C) is chosen from: ethylene glycol, propylene glycol, tetramethylene glycol, hexamethylene glycol, octanediol, nonanediol, decanediol, diethylene glycol, dipropylene glycol, triethylene glycol, tetraethylene glycol, polyethylene glycol, polypropylene glycol, polytetramethylene glycol, polyesters comprising hydroxyl ends, polybutadienes comprising hydroxyl ends, polydimethylsiloxanes comprising hydroxyl ends, polyisobutylenes comprising hydroxyl ends, polybutadiene-co-acrylonitrile copolymers comprising hydroxyl ends, dimer diols resulting from fatty acids and their mixtures.

12. Use of a material according to any one of the preceding claims to manufacture objects chosen from bumpers and fenders for ground vehicles, in particular trains, trucks, cars or carriages, including fork-lift trucks, guards for boats, play mats, bulletproof jackets, shooting targets, in particular for arrows, bullets and darts, sports protective gear, in particular leg guards, elbow guards and gloves, linings for one-piece sports clothing and protective helmets, and protective components for pipes and piping.
